# EUROPÄISCHE PATENTANMELDUNG

(11) **EP 4 822 724 A1**
(43) Veröffentlichungstag der Anmeldung: **14.10.2026**
(21) Anmeldenummer: 26166256.3
(22) Anmeldetag: 19.03.2026
(51) Int. Cl.: H01G 4/228, H01G 4/32, H01G 4/38, H01G 4/40, H01G 4/224, H01G 4/232

(54) **KONDENSATORMODUL UND SCHALTUNGSANORDNUNG**

(30) Priorität: 07.04.2025 DE 102025113529
(71) Anmelder: Volkswagen Aktiengesellschaft, 38440 Wolfsburg (DE)
(72) Erfinder: Sommer, Christian, 38440 Wolfsburg (DE); Schiedermeier, Maximilian, 38440 Wolfsburg (DE); Hartwig, Raphael, 38440 Wolfsburg (DE)

(57) **Zusammenfassung**

Die Erfindung betrifft ein Kondensatormodul (1), wobei das Kondensatormodul (1) mindestens vier als Wickel (5) ausgebildete Kondensatoren aufweist, wobei die Wickel (5) jeweils an den Stirnseiten (8) eine Elektrode (9) aufweisen und eine Mantelfläche (10) der Wickel (5) elektrisch isoliert ist, wobei das Kondensatormodul (1) ein erstes Kontaktteil (2), ein zweites Kontaktteil (3) und ein drittes Kontaktteil (4) aufweist, wobei das erste Kontaktteil (2) zum Anschließen an ein positives Potential (DC+), das zweite Kontaktteil (3) zum Anschließen an ein negatives Potential (DC-) und das dritte Kontaktteil (4) einen Mittelabgriff (M) bildet, wobei mindestens ein Wickel (5) zwischen dem ersten Kontaktteil (2) und dem dritten Kontaktteil (4) und mindestens ein Wickel (5) zwischen dem dritten Kontaktteil (4) und dem zweiten Kontaktteil (3) angeordnet ist, die zusammen eine Reihenschaltung bilden, wobei die Kontaktteile (2-4) jeweils einen Schnittstellenkontakt (6) für externe Anschlüsse aufweisen, wobei die Wickel (5) in mindestens einer Reihe angeordnet sind, wobei die Schnittstellenkontakte (6) als durchgehende Kontaktflächen (7) in einer Längsrichtung (L) des Kondensatormoduls (1) ausgebildet sind, wobei die Kontaktflächen (7) der Schnittstellenkontakte (6) zueinander parallel sind.

## Beschreibung

Die Erfindung betrifft ein Kondensatormodul und eine Schaltungsanordnung.

Kondensatormodule weisen eine Vielzahl von Kondensatoren auf, die häufig als Wickel ausgebildet sind. Dabei weisen die Wickel an ihren Stirnseiten Elektroden auf, über die diese von Kontaktteilen kontaktiert werden können, wobei die Mantelflächen der Wickel elektrisch isoliert sind. Die Wickel können sehr kompakt in einer Reihe oder als Matrix angeordnet werden, wobei dann ein Kontaktteil die Elektroden der einen Stirnseite und ein anderes Kontaktteil die Elektroden der anderen Stirnseite kontaktieren kann, sodass die Wickel elektrisch parallel verbunden sind, sodass sich deren Kapazität addiert. Ein Anwendungsfall für ein solches Kondensatormodul ist ein Zwischenkreiskondensator eines Wechselrichters. In diesem Fall werden dann die Kontaktteile mit einem positiven und einem negativen Anschluss des Wechselrichters verbunden.

In verschiedenen Anwendungen benötigt man Reihenschaltungen von Kondensatoren mit einem Mittelabgriff, beispielsweise wenn der Zwischenkreiskondensator für einen 3-Level-Wechselrichter verwendet werden soll. Aber auch in anderen Schaltungskonfigurationen benötigt man Reihenschaltungen von Kondensatoren. Eine Lösung wäre, zwei bekannte Kondensatormodule in Reihe zu schalten.

Der Erfindung liegt das technische Problem zugrunde, ein kompaktes Kondensatormodul mit einem Mittelabgriff und niedriger parasitärer Induktivität zu schaffen sowie eine Schaltungsanordnung mit einem 3-Level-Wechselrichter und einem Zwischenkreiskondensator zur Verfügung zu stellen.

Die Lösung des technischen Problems ergibt sich durch ein Kondensatormodul mit den Merkmalend des Anspruchs 1 sowie eine Schaltungsanordnung mit den Merkmalen des Anspruchs 10. Weitere vorteilhafte Ausgestaltungen der Erfindung ergeben sich aus den Unteransprüchen.

Hierzu weist das Kondensatormodul mindestens vier als Wickel ausgebildete Kondensatoren auf, wobei die Wickel jeweils an den Stirnseiten eine Elektrode aufweisen und die Mantelfläche der Wickel elektrisch isoliert ist, wobei das Kondensatormodul ein erstes Kontaktteil, ein zweites Kontaktteil und ein drittes Kontaktteil aufweist, wobei das erste Kontaktteil zum Anschließen an ein positives Potential, das zweite Kontaktteil zum Anschließen an ein negatives Potential und das dritte Kontaktteil einen Mittelabgriff bildet, wobei mindestens ein Wickel zwischen dem ersten Kontaktteil und dem dritten Kontaktteil und mindestens ein Wickel zwischen dem dritten Kontaktteil und dem zweiten Kontaktteil angeordnet ist, die zusammen eine Reihenschaltung bilden, wobei die Kontaktteile jeweils einen Schnittstellenkontakt für externe Anschlüsse aufweisen, wobei die Wickel in mindestens einer Reihe angeordnet sind, wobei die Schnittstellenkontakte als durchgehende Kontaktflächen in einer Längsrichtung des Kondensatormoduls ausgebildet sind, wobei die Kontaktflächen der Schnittstellenkontakte zueinander parallel sind. Die Wickel weisen Folien auf, die beispielsweise aus Polypropylen bestehen. Die mindestens beiden anderen Wickel können ebenfalls als Reihenschaltung verschaltet sein, wobei dann die Reihenschaltungen zueinander parallel geschaltet sind. Vorzugsweise sind aber die beiden anderen Wickel direkt zwischen dem ersten Kontaktteil und dem zweiten Kontaktteil angeordnet. Ein Vorteil ist, dass dadurch ein Großteil des Kommutierungsstromes über die Wickel zwischen dem ersten und zweiten Kontaktteil fließen kann, der eine niedrigere Kommutierungsinduktivität aufweist als der Pfad über den Mittelabgriff. Das Kondensatormodul kann auch mehr als vier Wickel aufweisen, beispielsweise 6, 8, 10 oder 12 Wickel. Dabei können die Wickel auch in mehreren Reihen angeordnet sein, die dann zueinander parallel angeordnet sind.

Vorzugsweise weisen alle Wickel die gleiche Höhe auf. Weiter vorzugsweise sind die Wickel einer Reihenschaltung gleich ausgebildet. Die Wickel, die gegebenenfalls zwischen dem ersten Kontaktteil und dem zweiten Kontaktteil angeordnet sind, weisen hingegen eine höhere Spannungsfestigkeit auf und können eine größere oder kleinere Kapazität aufweisen.

In einer Ausführungsform sind die Schnittstellenkontakte des ersten Kontaktteils und des zweiten Kontaktteils in entgegengesetzter Richtungen abgewinkelt, sodass das Anschließen der beiden unterschiedlichen Potentiale vereinfacht ist. Das dritte Kontaktteil kann dabei entweder auch in Richtung des ersten Kontaktteils oder aber in Richtung des zweiten Kontaktteils abgewinkelt sein.

In einer weiteren Ausführungsform sind die Kontaktflächen der Schnittstellenkontakte parallel zu den Elektroden(-flächen) der Wickel.

In einer alternativen Ausführungsform sind die Kontaktflächen der Schnittstellenkontakte senkrecht zur Elektrodenfläche der Wickel.

In einer weiteren Ausführungsform weist das Kondensatormodul ein Gehäuse auf, in dem die Wickel angeordnet sind, wobei das Kondensatormodul mit einer Isoliermasse umhüllt ist. Die Isoliermasse kann beispielsweise eine Vergussmasse oder eine Moldmasse sein. Bei einer Ausführungsform, wo die Kontaktflächen der Schnittstellenkontakte senkrecht zur Elektrodenfläche der Wickel angeordnet sind, können diese seitlich aus dem Gehäuse herausgeführt werden, sodass sowohl eine Oberseite als auch eine Unterseite des Gehäuses an eine Kühleinrichtung anschließbar sind.

In einer weiteren Ausführungsform sind die mindestens zwei Wickel der Reihenschaltung in Querrichtung zueinander versetzt. Hierdurch kann ein Abstand zwischen dem dritten Kontaktteil und dem zugeordneten Wickel, der zwischen dem dritten Kontaktteil und dem zweiten Kontaktteil angeordnet ist, reduziert werden, sodass dieser eine vergleichbare parasitäre Induktivität aufweist, wie der Wickel zwischen erstem Kontaktteil und drittem Kontaktteil, wo das erste Kontaktteil möglich dicht an der Mantelfläche des Wickels geführt wird, um die parasitäre Induktivität klein zu halten.

In einer weiteren Ausführungsform sind mindestens zwei Wickel zwischen dem ersten Kontaktteil und dem zweiten Kontaktteil angeordnet. Vorzugsweise sind die Wickel zwischen dem ersten Kontaktteil und dem zweiten Kontaktteil am Anfang und am Ende der Reihe angeordnet, wobei die Wickel der Reihenschaltung (Reihenschaltungen) dazwischen angeordnet sind. Allerdings kann die Reihenfolge auch vertauscht werden. Auch ist es möglich, dass am Anfang der Reihe alle Wickel angeordnet sind, die zwischen dem ersten Kontaktteil und dem zweiten Kontaktteil angeordnet sind.

In einer weiteren Ausführungsform weisen die Wickel der Reihenschaltung eine erste Foliendicke auf und die Wickel zwischen dem ersten Kontaktteil und dem zweiten Kontaktteil eine zweite Foliendicke auf, wobei die zweite Foliendicke größer als die erste Foliendicke ist und kleiner als die doppelte erste Foliendicke. Dem liegt folgende Erkenntnis zugrunde. Die zu wickelnde Foliendicke ist abhängig von der maximalen Spannung. Die Foliendicke ist umgekehrt proportional zur Kapazität. Da die zweite Foliendicke des Wickels kleiner als die doppelte erste Foliendicke ist, ist die Kapazitätsdichte (Kapazität pro Volumen) des Wickels zwischen dem ersten und zweiten Kontaktteil größer als die Summe der beiden Wickel mit der ersten Foliendicke.

In einer weiteren Ausführungsform ist auf die Kontaktteile mindestens abschnittsweise Isolationspapier aufgebracht. Das Isolationspapier kann dabei abschnittsweise beidseitig oder nur einseitig aufgebracht sein.

Die Schaltungsanordnung umfasst einen 3-Level-Wechselrichter mit einem Zwischenkreiskondensator, der durch ein zuvor beschriebenes Kondensatormodul gebildet wird. Der 3-Level-Wechselrichter ist vorzugswiese als T-Type-Wechselrichter ausgebildet.

Die Erfindung wird nachfolgend anhand bevorzugter Ausführungsbeispiele näher erläutert. Die Figuren zeigen:
- Fig. 1: ein schematisches Ersatzschaltbild eines Kondensatormoduls in einer ersten Ausführungsform,
- Fig. 2: eine schematische perspektivische Darstellung eines Kondensatormoduls in einer ersten Ausführungsform,
- Fig. 3: eine schematische Draufsicht auf das Kondensatormodul gemäß Fig. 2,
- Fig. 4: eine Schnittdarstellung entlang des Schnittes A-A durch das Kondensatormodul gemäß Fig. 3,
- Fig. 5: eine Schnittdarstellung entlang des Schnittes B-B durch das Kondensatormodul gemäß Fig. 3,
- Fig. 6: eine Schnittdarstellung entlang des Schnittes C-C durch das Kondensatormodul gemäß Fig. 3,
- Fig. 7: eine schematische perspektivische Darstellung eines Kondensatormoduls mit sechs Kondensatoren,
- Fig. 8: eine schematische perspektivische Darstellung eines Kondensatormoduls mit sechs Kondensatoren in einer alternativen Ausführungsform,
- Fig. 9: eine Draufsicht auf das Kondensatormodul gemäß Fig. 8,
- Fig. 10: eine Unteransicht auf das Kondensatormodul gemäß Fig. 8,
- Fig. 11: eine Schnittdarstellung A-A durch ein alternatives Kondensatormodul mit Kontaktflächen senkrecht zu den Elektrodenflächen,
- Fig. 12: eine Schnittdarstellung B-B durch ein Kondensatormodul mit Kontaktflächen senkrecht zu den Elektrodenflächen,
- Fig. 13: eine Schnittdarstellung C-C durch ein Kondensatormodul mit Kontaktflächen senkrecht zu den Elektrodenflächen und
- Fig. 14: eine schematische Darstellung auf ein Kondensatormodul in einer weiteren Ausführungsform.

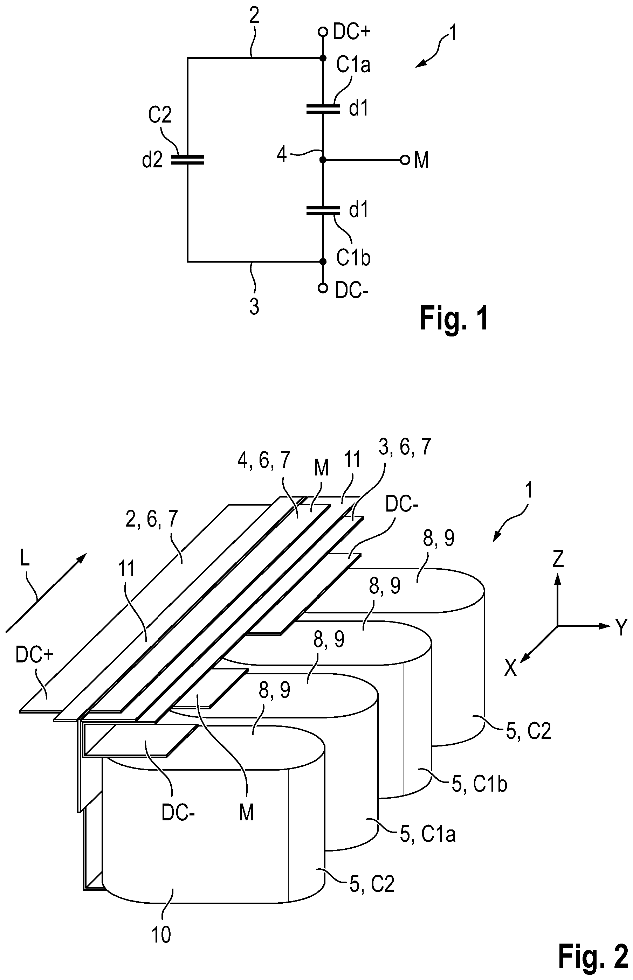

In der Fig. 1 ist schematisch ein Schaltbild eines Kondensatormoduls 1 dargestellt, wobei die Kondensatoren C1a, C1b und C2 als Wickel ausgebildet sind. Dabei sind die Kondensatoren C1a, C1b in Reihe geschaltet, wobei parallel zur Reihenschaltung von C1a und C1b die Kondensatoren C2 geschaltet sind. Das Kondensatormodul 1 weist ein erstes Kontaktteil 2 auf, das mit einem positiven Potential DC+ verbunden ist. Weiter weist das Kondensatormodul 1 ein zweites Kontaktteil 3 auf, das mit einem negativen Potential DC- verbunden ist. Schließlich weist das Kondensatormodul 1 ein drittes Kontaktteil 4 auf, das einen Mittelabgriff M bildet. Die Kondensatoren C1a, C1b weisen jeweils eine erste Foliendicke d1 auf, wohingegen die Kondensatoren C2 eine zweite Foliendicke d2 aufweist, wobei gilt: $d 2 > d 1 und d 2 < 2 ⋅ d 1$

Weiter gilt allgemein: $C = \frac{{ε}_{0} ⋅ {ε}_{r} ⋅ A}{d} ,$ wobei d die Dicke der Folie ist (die vorzugsweise aus Polypropylen ist) und A die ausgerollte Fläche des Wickels ist. Aufgrund der Tatsache, dass d2 < 2 · d1 ist, ist die Kapazitätsdichte (Kapazität durch Volumen) von C2 größer als die Summe der beiden Kondensatoren C1a, C1b, sodass ein kompakteres Kondensatormodul 1 bei vorgegebener Gesamtkapazität erreicht werden kann.

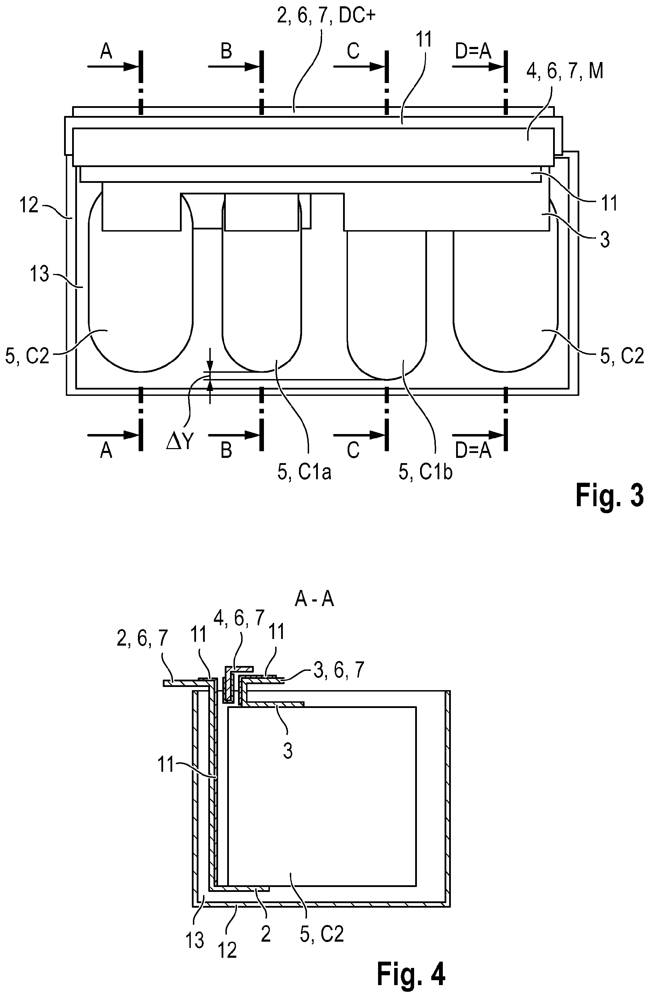

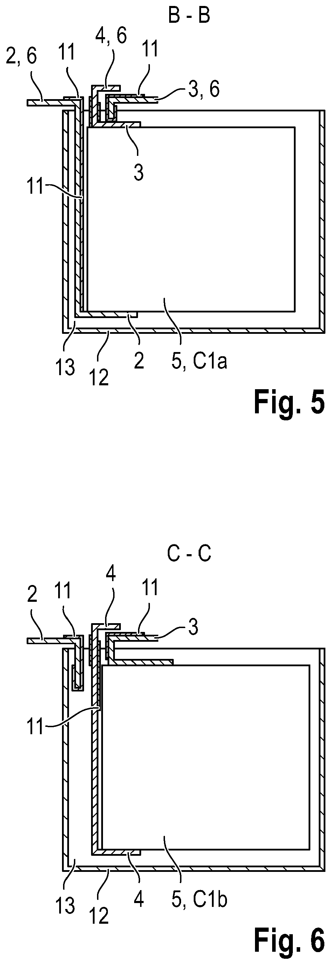

In der Fig. 2 ist schematisch ein Kondensatormodul 1 in einer ersten Ausführungsform dargestellt, das vier Wickel 5 aufweist, wobei die verschiedenen Wickel 5 zusätzlich mit den Bezeichnungen für die Kondensatoren C1a, C1b und C2 gemäß Fig. 1 gekennzeichnet wurden. Dabei weisen alle Wickel 5 die gleiche Höhe auf. Die drei Kontaktteile 2-4 weisen jeweils einen Schnittstellenkontakt 6 auf, die als durchgehende Kontaktflächen 7 ausgebildet sind und sich im Wesentlichen über die volle Länge L des Kondensatormoduls 1 erstrecken. Die Wickel 5 weisen an den Stirnseiten 8 Elektroden 9 auf, wobei die Mantelfläche 10 elektrisch isoliert ist. Auf die Kontaktteile 2-4 ist das Isolationspapier 11 aufgebracht, sodass die Kontaktteile 2-4 ausreichend elektrisch gegeneinander isoliert sind. Dabei sind die Wickel 5 in einer Reihe angeordnet, wobei die Kondensatoren C2 am Anfang und am Ende der Reihe angeordnet sind. In der Fig. 3 ist das Kondensatormodul 1 in einer Draufsicht dargestellt. Dabei sind die beiden Wickel 5 für die Kondensatoren C2 etwas breiter als die Wickel 5 für die Kondensatoren C1a und C1b. Des Weiteren erkennt man, dass der Wickel 5 für den Kondensator C1b etwas in Y-Richtung nach vorne versetzt angeordnet ist im Vergleich zum Wickel 5 des Kondensators C1a. Der Versatz ist mit ΔY gekennzeichnet. Hierdurch kann der etwas größere Abstand des Kontaktteils 3 zur Mantelfläche 10 der Wickel 5 kompensiert werden, was anhand der Schnittdarstellungen in Fig. 4 bis Fig. 6 verdeutlicht wird. Weiter ist in der Fig. 3 ein Gehäuse 12 dargestellt, in dem das Kondensatormodul 1 angeordnet ist und mit einer Isoliermasse 13 vergossen oder umspritzt ist.

In der Fig. 4 ist erkennbar, dass der Schnittstellenkontakt 6 des ersten Kontaktteils 2 nach links rechtwinklig abgebogen ist, wohingegen der Schnittstellenkontakt 6 des zweiten Kontaktteils 3 nach rechts abgebogen ist, sodass deren Kontaktierung vereinfacht ist. Im dargestellten Beispiel ist der Schnittstellenkontakt 6 des dritten Kontaktteils 4 ebenfalls nach rechts abgewinkelt. Dieser kann aber auch prinzipiell nach links abgebogen sein. Die Kontaktflächen 7 der Schnittstellenkontakte 6 liegen dabei in einer X-Y-Ebene und sind parallel zu den Elektrodenflächen der Wickel 5. Der Wickel 5 in der Fig. 4 wird an der Oberseite vom zweiten Kontaktteil 3 kontaktiert, das dort U-förmig ausgebildet ist. An der Unterseite wird der Wickel 5 durch das erste Kontaktteil 2 kontaktiert, wobei dieses möglichst dicht am Wickel 5 bzw. dessen Mantelfläche 10 nach unten geführt wird, um die Induktivität möglichst gering zu halten. Der minimale Abstand ist dabei durch die Dicke des Isolationspapiers 11 und die Biegeradien des Kontaktteils 2 gegeben. Durch den Versatz ΔY kann so das dritte Kontaktteil 4 mit seinem Isolationspapier 11 im gleichen Abstand zu seinem Wickel 5,C1b geführt werden. Das dabei der Abstand zu dem ersten Kontaktteil 2 erhöht wird, spielt keine Rolle, da der Wickel 5,C1b mit dem zweiten Kontaktteil 3 elektrisch nicht verbunden ist.

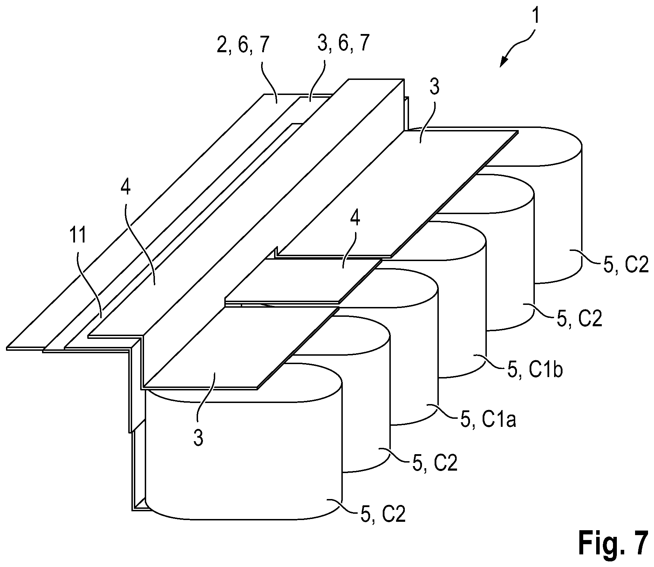

In der Fig. 7 ist eine alternative Ausführungsform für ein Kondensatormodul 1 dargestellt, das sechs Wickel 5 aufweist. Dabei sind vier Wickel 5 als Kondensatoren C2 und zwei Wickel 5 als Kondensatoren C1a, C1b ausgebildet, wobei die Wickel 5,C2 wieder am Anfang und am Ende der Reihe angeordnet sind.

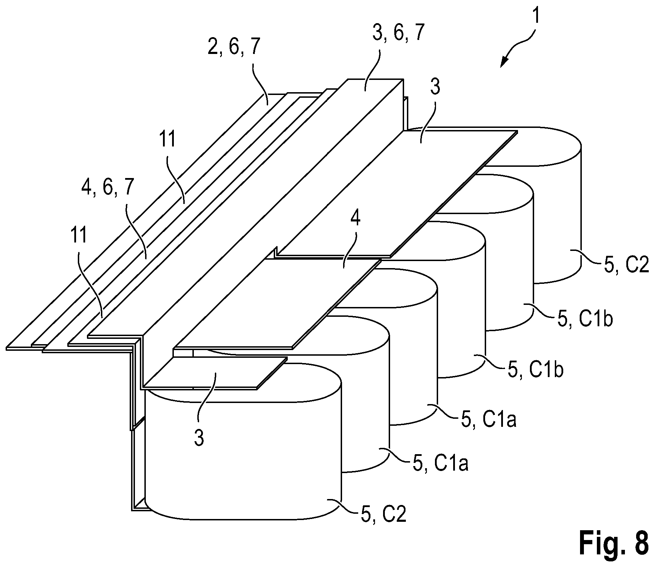

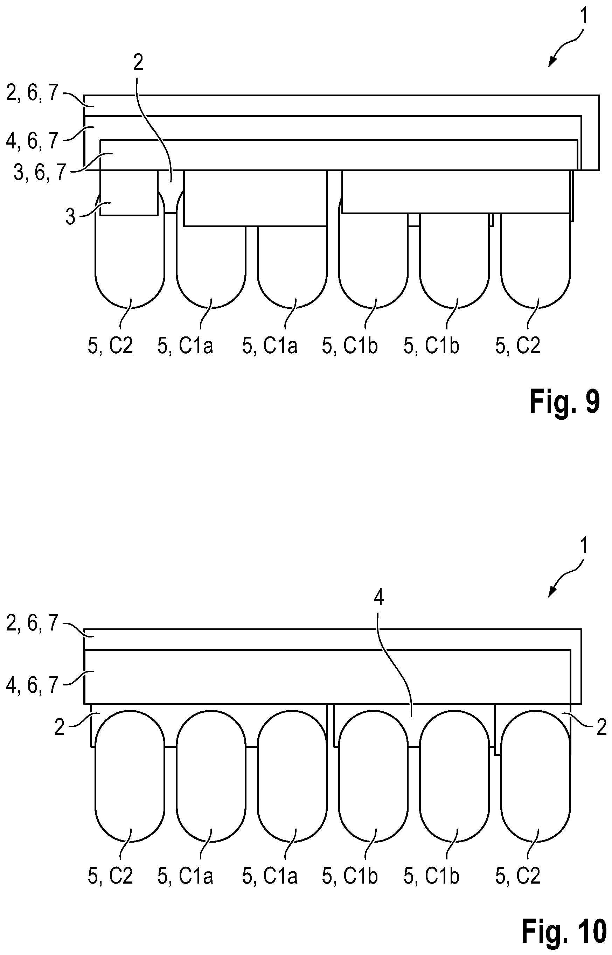

In Fig. 8 bis Fig. 10 ist eine weitere alternative Ausführungsform eines Kondensatormoduls 1 dargestellt, das wieder sechs Wickel 5 aufweist, wobei dieses nur zwei Wickel 5 mit Kondensatoren C2 und dafür jeweils zwei Kondensatoren C1a und C1b aufweist, wobei der Versatz ΔY nicht dargestellt ist.

Ein weiterer Unterschied neben der Anzahl der Wickel 5 ist bei den Ausführungen gemäß Fig. 7 bis Fig. 10, dass alle Schnittstellenkontakte 6 mit ihren Kontaktflächen 7 in die gleiche Richtung abgebogen sind.

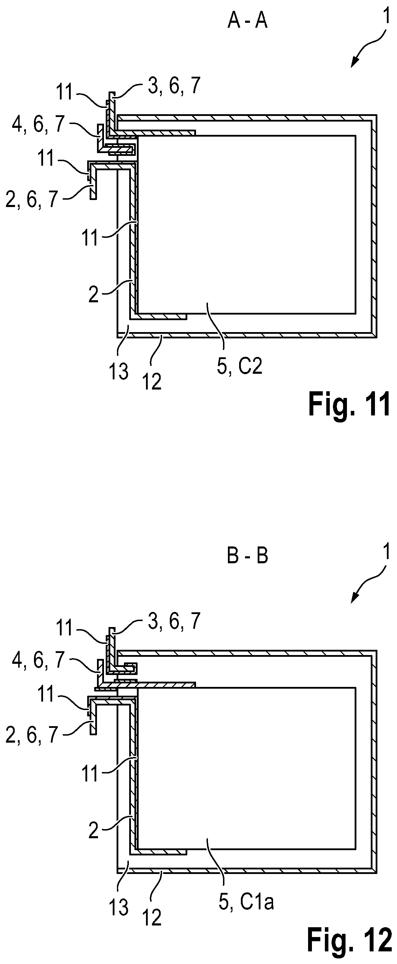

In Fig. 11 bis Fig. 13 sind Schnittdarstellungen analog den Schnittdarstellungen gemäß Fig. 4 bis Fig. 6 für eine weitere Ausführungsform dargestellt. Der Unterschied zu der Ausführungsform gemäß Fig. 2 bis Fig. 6 ist, dass die Kontaktteile 2-4 seitlich herausgeführt werden und dann abgewinkelt werden, sodass die Kontaktflächen 7 der Schnittstellenkontakte 6 in einer X-Z-Ebene liegen, also senkrecht zu den Elektrodenflächen. Dabei ist typischerweise L1 größer L2. Diese Anordnung der Schnittstellenkontakte 6 kann in bestimmten Fällen vorteilhaft bezüglich der Ausnutzung des Bauraums sein. Des Weiteren ermöglicht diese Anordnung die Anbindung des Kondensatormoduls 1 an der Oberseite und Unterseite des Gehäuses 12 an eine Kühleinrichtung.

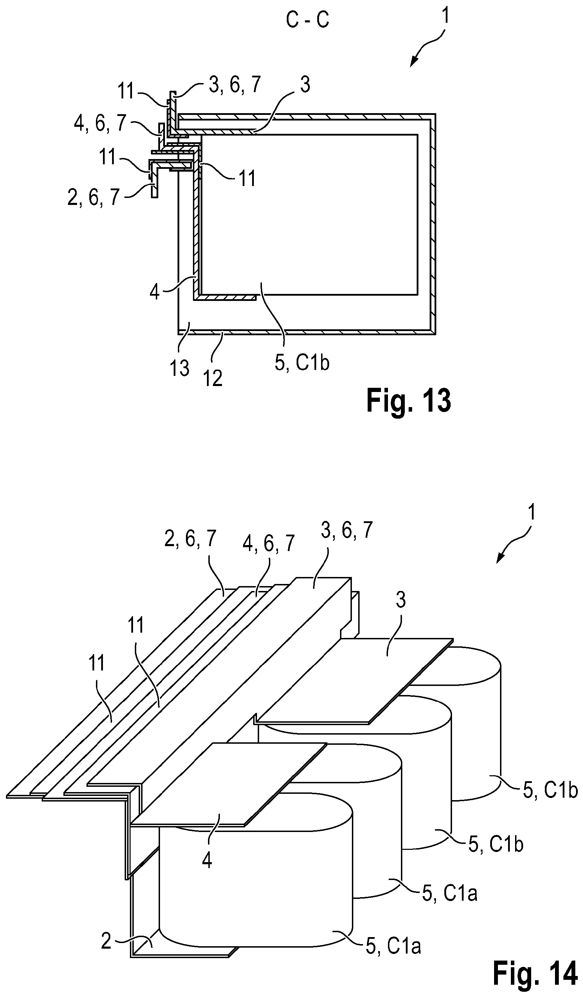

Schließlich ist in Fig. 14 eine weitere Ausführungsform für ein Kondensatormodul 1 dargestellt, das keine Kondensatoren C2 aufweist, sondern nur Kondensatoren C1a und C1b.

### Bezugszeichenliste

- 1: Kondensatormodul
- 2: erstes Kontaktteil
- 3: zweites Kontaktteil
- 4: drittes Kontaktteil
- 5: Wickel
- 6: Schnittstellenkontakt
- 7: Kontaktfläche
- 8: Stirnseite
- 9: Elektrode
- 10: Mantelfläche
- 11: Isolationspapier
- 12: Gehäuse
- 13: Isoliermasse
- C1a: Kondensator
- C1b: Kondensator
- C2: Kondensator
- d1: erste Foliendicke
- d2: zweite Foliendicke
- DC+: positives Potential
- DC-: negatives Potential
- L: Längsrichtung
- L1: Länge
- L2: Länge
- M: Mittelabgriff
- ΔY: Versatz

## Patentansprüche

1. Kondensatormodul (1), wobei das Kondensatormodul (1) mindestens vier als Wickel (5) ausgebildete Kondensatoren aufweist, wobei die Wickel (5) jeweils an den Stirnseiten (8) eine Elektrode (9) aufweisen und eine Mantelfläche (10) der Wickel (5) elektrisch isoliert ist, wobei das Kondensatormodul (1) ein erstes Kontaktteil (2), ein zweites Kontaktteil (3) und ein drittes Kontaktteil (4) aufweist, wobei das erste Kontaktteil (2) zum Anschließen an ein positives Potential (DC+), das zweite Kontaktteil (3) zum Anschließen an ein negatives Potential (DC-) und das dritte Kontaktteil (4) einen Mittelabgriff (M) bildet, wobei mindestens ein Wickel (5) zwischen dem ersten Kontaktteil (2) und dem dritten Kontaktteil (4) und mindestens ein Wickel (5) zwischen dem dritten Kontaktteil (4) und dem zweiten Kontaktteil (3) angeordnet ist, die zusammen eine Reihenschaltung bilden, wobei die Kontaktteile (2-4) jeweils einen Schnittstellenkontakt (6) für externe Anschlüsse aufweisen, wobei die Wickel (5) in mindestens einer Reihe angeordnet sind, wobei die Schnittstellenkontakte (6) als durchgehende Kontaktflächen (7) in einer Längsrichtung (L) des Kondensatormoduls (1) ausgebildet sind, wobei die Kontaktflächen (7) der Schnittstellenkontakte (6) zueinander parallel sind.

2. Kondensatormodul nach Anspruch 1, **dadurch gekennzeichnet, dass** die Schnittstellenkontakte (6) des ersten Kontaktteils (2) und des zweiten Kontaktteils (3) in entgegengesetzte Richtungen abgewickelt sind.

3. Kondensatormodul nach Anspruch 1 oder 2, **dadurch gekennzeichnet, dass** die Kontaktflächen (7) der Schnittstellenkontakte (6) parallel zu den Elektroden (9) der Wickel (5) sind.

4. Kondensatormodul nach Anspruch 1 oder 2, **dadurch gekennzeichnet, dass** die Kontaktflächen (7) der Schnittstellenkontakte (6) senkrecht zur Elektrodenfläche der Wickel (5) sind.

5. Kondensatormodul nach einem der vorangegangenen Ansprüche, **dadurch gekennzeichnet, dass** das Kondensatormodul (1) ein Gehäuse (12) aufweist, in dem die Wickel (5) angeordnet sind, wobei das Kondensatormodul (1) mit einer Isoliermasse (13) umhüllt ist.

6. Kondensatormodul nach einem der vorangegangenen Ansprüche, **dadurch gekennzeichnet, dass** die mindestens zwei Wickel (5) der Reihenschaltung in Querrichtung zueinander um einen Versatz ΔY versetzt angeordnet sind.

7. Kondensatormodul nach einem der vorangegangenen Ansprüche, **dadurch gekennzeichnet, dass** mindestens zwei Wickel (5) zischen dem ersten Kontaktteil (2) und dem zweiten Kontaktteil (3) angeordnet sind.

8. Kondensatormodul nach Anspruch 7, **dadurch gekennzeichnet, dass** die Wickel (5) der Reihenschaltung eine erste Foliendicke (d1) aufweisen und die Wickel (5) zwischen dem ersten Kontaktteil (2) und dem zweiten Kontaktteil (3) eine zweite Foliendicke (d2) aufweisen, wobei die zweite Foliendicke (d2) größer als die erste Foliendicke (d1) ist und kleiner als die doppelte erste Foliendicke (d1) ist.

9. Kondensatormodul nach einem der vorangegangenen Ansprüche, **dadurch gekennzeichnet, dass** auf die Kontaktfläche (2-4) mindestens abschnittsweise Isolationspapier (11) aufgebracht ist.

10. Schaltungsanordnung, umfassend einen 3-Level-Wechselrichter mit einem Zwischenkreiskondensator, wobei der Zwischenkreiskondensator als ein Kondensatormodul (1) nach einem der Ansprüche 1 bis 9 ausgebildet ist.
